# EUROPÄISCHE PATENTSCHRIFT

(11) **EP 0 919 356 B1**
(45) Veröffentlichungstag und Bekanntmachung des Hinweises auf die Patenterteilung: **17.07.2002**
(21) Anmeldenummer: 98117755.3
(22) Anmeldetag: 18.09.1998
(51) Int. Cl.: B29C 51/10, B29C 51/38, B29C 69/00

(54) **Vakuumformmaschine zum Umformen von Formteilen**
Vacuum forming machine for reshaping articles
Machine à former par le vide pour reformer des articles

(30) Priorität: 25.11.1997 DE 29720910 U
(43) Veröffentlichungstag der Anmeldung: 02.06.1999
(73) Patentinhaber: Georg Geiss Maschinenfabrik, 96145 Sesslach (DE)
(72) Erfinder: Geiss, Manfred, 96145 Sesslach (DE)
(74) Vertreter: Reinhard - Skuhra - Weise & Partner

(56) Entgegenhaltungen:
- EP-A- 0 579 937
- EP-A- 0 618 062
- WO-A-86/05425
- DE-A- 3 103 038

## Beschreibung

Die Erfindung betrifft eine Vakuumformmaschine zum Umformen von mindestens einem Formteil gemäß dem Oberbegriff des Patentanspruchs 1.

Bei den Thermoplasten bzw. Plastomeren handelt es sich um Kunststoff-Werkstoffe, die wiederholt plastisch umformbar sind, indem man sie auf entsprechende Temperaturen erwärmt. Das Umformen erfolgt durch Vakuumformverfahren zur Herstellung beliebig geformter Hohlkörper.

Bei gewöhnlichen Vakuumformverfahren wird die umformende Kraft durch den Luftdruck gebildet. Dadurch sind die Bewegungen der Formwerkzeuge und die Schließkraft zwischen den Formwerkzeugen mit normalen pneumatischen Antrieben zu bewerkstelligen.

Es gibt zwei bekannte, besondere Vakuumformverfahren, bei denen höhere Kräfte, insbesondere höhere Schließkräfte zwischen den Formwerkzeugen, benötigt werden. Bei diesen bekannten Vakuumformverfahren handelt es sich zum einen um das sogenannte "Twin-Sheet"-Vakuumformverfahren, das aus der gattungsbildenden EP-0 579 937 bekannt ist, und zum anderen um das sogenannte "Überdruck"-Vakuumformverfahren.

Bei dem bekannten "Twin-Sheet"-Vakuumformverfahren werden zwei durch einen Distanzrahmen voneinander getrennte aus Kunststoffplatten bestehende Formteile gleichzeitig beheizt und mittels zweier Formwerkzeuge gleichzeitig umgeformt. Anschließend werden diese beiden umgeformten Formteile durch Zusammenpressen miteinander verschweißt. Die Eigenwärme der Thermoplast-Kunststofformteile ermöglicht ein Verschweißen der Formteile in dem gleichen Arbeitsgang, ohne daß irgendwelche Zusatzstoffe eingesetzt werden müssen. Die hierfür benötigte Schließkraft zwischen den beiden Formwerkzeugen ist allerdings derart hoch, daß sie durch eine normale mit pneumatischen Antrieben arbeitende Vakuumformmaschine nicht aufgebracht werden kann.

Bei dem bekannten "Überdruck"-Vakuumformverfahren wird eine einzige Kunststoffplatte umgeformt. Die umformende Kraft wird dabei dadurch erhöht, daß über das durch die Kunststoffplatte gebildete Formteil eine Druckglocke gefahren wird. In dieser Druckglocke wird ein Überdruck zur Umformung des Formteils aufgebaut. Die Schließkraft für die Druckglocke muß demzufolge gegen den in der Druckglocke aufgebauten Überdruck aufgebracht werden. Bei einem üblichen in der Druckglocke aufgebauten Überdruck von 6 bar wird eine Schließkraft von etwa 600 kN pro Quadratmeter benötigt.

Das "Twin-Sheet"-Vakuumformverfahren und das "Überdruck"-Vakuumformverfahren benötigen derart hohe Schließkräfte, daß die bei gewöhnlichen Vakuumformmaschinen eingesetzten pneumatischen Antriebe nicht ausreichen. Vakuumformmaschinen zum alternativen Einsatz des "Twin-Sheet"-Vakuumformverfahrens oder des "Überdruck"-Vakuumformverfahrens benutzen daher üblicherweise hydraulische Antriebe. Dabei werden anstelle der üblichen Pneumatikzylinder zum Antrieb der beiden Formwerkzeuge Hydraulikzylinder eingesetzt. Derartige hydraulische Antriebe haben den Nachteil, daß sie Fluid- bzw. ölvolumina in großem Ausmaß enthalten, wobei die Elastizität des Fluids die Schließkraft beeinflußt und deren genaue Einstellung erschwert. Ferner sind die Ventilgrößen, die Strömungsquerschnitte usw. relativ groß, so daß deren sichere Steuerung sehr aufwendig ist. Daher erfordern derartige hydraulische Antriebe ein aufwendiges Meß- und Regelsystem.

Bei einer Vakuumformmaschine, die sowohl die normalen mit Luftdruck arbeitenden Vakuumformverfahren, als auch die mit hohen Schließkräften arbeitenden Vakuumformverfahren durchführen kann, benötigt man neben dem pneumatischen Antrieb auch einen hydraulischen Antrieb. Derartige Maschinen, die sowohl pneumatisch als auch hydraulisch arbeiten können, führen jedoch zu einem derart hohen technischen Aufwand, daß sie nicht wirtschaftlich betrieben werden können.

Aus der WO-86,05425-A ist eine Schnellspannvorrichtung bekannt, mit der nah aneinander gebrachte Teile mit hohen Spannkräften mittels hydraulischer Betätigung zusammengeführt werden können.

Der Erfindung liegt die Aufgabe zugrunde, eine gewöhnliche Vakuumformmaschine mit geringem technischen Aufwand für den Einsatz bei besonderen Verformverfahren mit hohen Schließkräften, insbesondere für "Twin-Sheet" und "Überdruck" Verformverfahren, verfügbar zu machen.

Erfindungsgemäß wird diese Aufgabe durch die im Patentanspruch 1 angegebenen Merkmale gelöst.

Bevorzugte weitere Ausgestaltungen der erfindungsgemäßen Vakuumformmaschine sind den Ansprüchen 2 - 15 zu entnehmen.

Die mit der Erfindung erzielten Vorteile bestehen insbesondere darin, dass durch den Einsatz von Kernzug-Verriegelungszylindern sehr hohe Schließkräfte zum Schließen der Formwerkzeuge aufgebracht werden können, ohne daß hydraulische Antriebe vorgesehen sind.

Ein weiterer Vorteil besteht darin, daß die Schließkraft elastisch durch eine Vorspannkraft aufbringbar ist, wodurch die Schweißfugen zwischen zwei Formteilen mit einer vorbestimmten Flächenvorspannkraft beaufschlagt werden und so eine optimale Reproduzierbarkeit der Verschweißung ermöglicht wird.

Ein weiterer Vorteil der Erfindung besteht darin, daß sowohl mit als auch ohne Vorspannkraft eine Schließkraft an die Formwerkzeuge aufgebracht werden kann.

Ein weiterer Vorteil der Erfindung besteht darin, daß durch starre Verriegelung der Kernzug-Verriegelungszylinder ein elastisches Öffnen der Formwerkzeuge verhindert wird.

Ein Ausführungsbeispiel der Erfindung ist in den nachfolgenden Zeichnungen dargestellt und wird im folgenden näher beschrieben.

Es zeigen:
- Figur 1: eine erfindungsgemäße Vakuumformmaschine mit auseinandergefahrenen Formwerkzeugen;
- Figur 2: die in Figur 1 dargestellte erfindungsgemäße Vakuumformmaschine mit zusammengefahrenen Formwerkzeugen;
- Figur 3: eine Detailansicht der in Figur 2 dargestellten zusammengefahrenen Formwerkzeuge;
- Figur 4: einen Kernzug-Verriegelungszylinder;
- Figur 5: einen mit einer Verriegelungseinrichtung verriegelten Kernzug-Verriegelungszylinder;
- Figur 6: ein Kraft/Zeit- und ein Weg/Zeit-Diagramm für die Formwerkzeuge bei starrer Verriegelung;
- Figur 7: ein Kraft/Zeit- und ein Weg/Zeit-Diagramm der Formwerkzeuge bei Aufbringen einer elastischen Vorspannung.

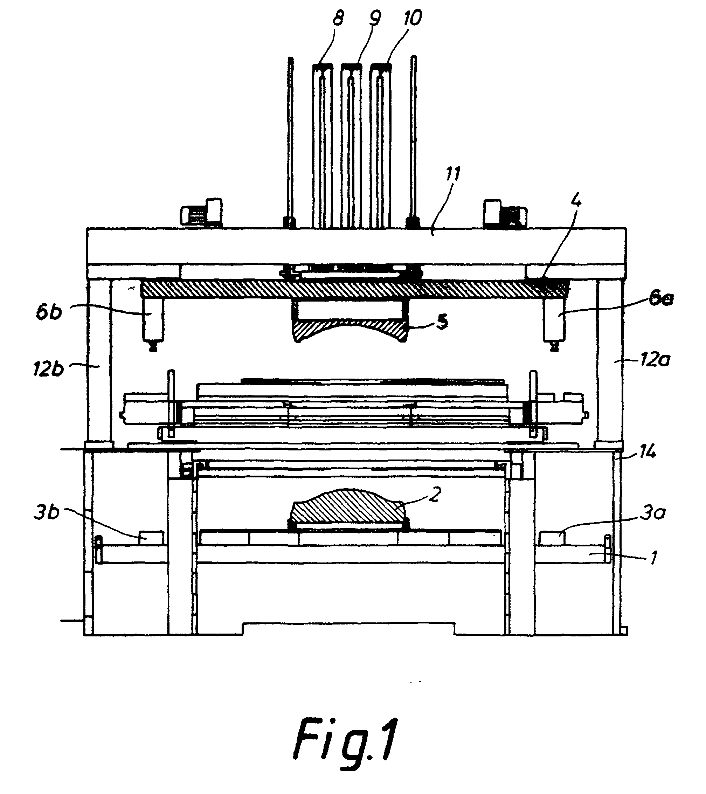

Figur 1 zeigt eine Ausführungsform der erfindungsgemäßen Vakuumformmaschine.

Ein unterer vertikal antreibbarer gestellförmiger Maschinenaufbau 1 trägt ein unteres Formwerkzeug 2 sowie zwei Verriegelungseinrichtungen 3a, 3b.

An einem oberen gestellförmigen Maschinenaufbau 4 sind ein oberes Formwerkzeug 5 sowie zwei Kernzug-Verriegelungszylinder 6a, 6b angebracht. Der obere Maschinenaufbau 4 ist durch pneumatische Oberstempelzylinder 8, 9, 10 vertikal bewegbar. Die pneumatischen Oberstempelzylinder 8, 9, 10 sind an einem Oberstempelträger 11 gelagert. Der Oberstempelträger 11 ist über pneumatische Tischzylinder 12a, 12b an dem unteren Maschinentisch 13 befestigt. Bei dem in Figur 1 dargestellten Betriebszustand sind die beiden Formwerkzeuge 2, 5 auseinander gefahren, wobei sich das obere Formwerkzeug 5 in der oberen Endlage befindet und das untere Formwerkzeug 2 in der unteren Endlage. Die Kernzug-Verriegelungszylinder 6a, 6b sind von den zugehörigen Verriegelungseinrichtungen 3a, 3b entriegelt.

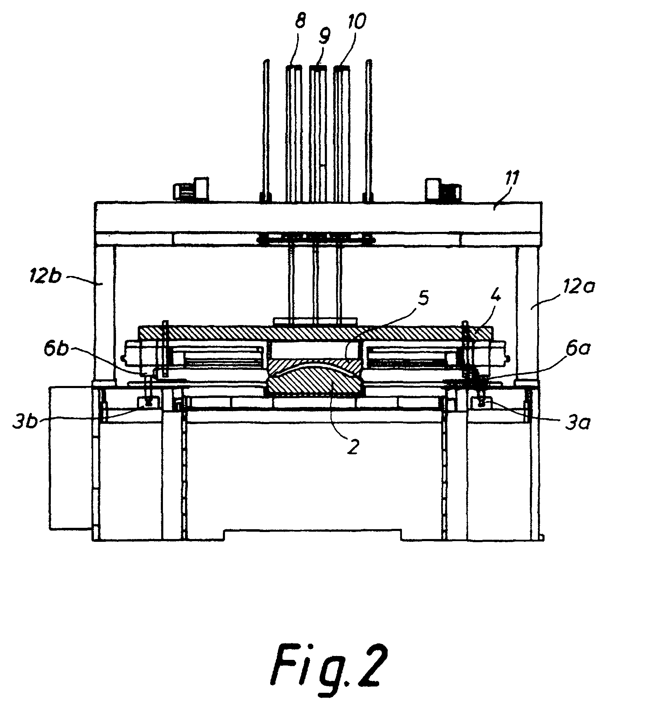

Figur 2 zeigt die erfindungsgemäße Vakuumformmaschine mit zusammengefahrenen Formwerkzeugen 2, 5.

Der untere Maschinenaufbau 1 befindet sich bei dem in Figur 2 dargestellten Betriebszustand in seiner oberen Endlage und der obere Maschinenaufbau 4 befindet sich in seiner unteren Endlage. Die Kernzug-Verriegelungszylinder 6a, 6b sind mit den zugehörigen Verriegelungseinrichtungen 3a, 3b verriegelt.

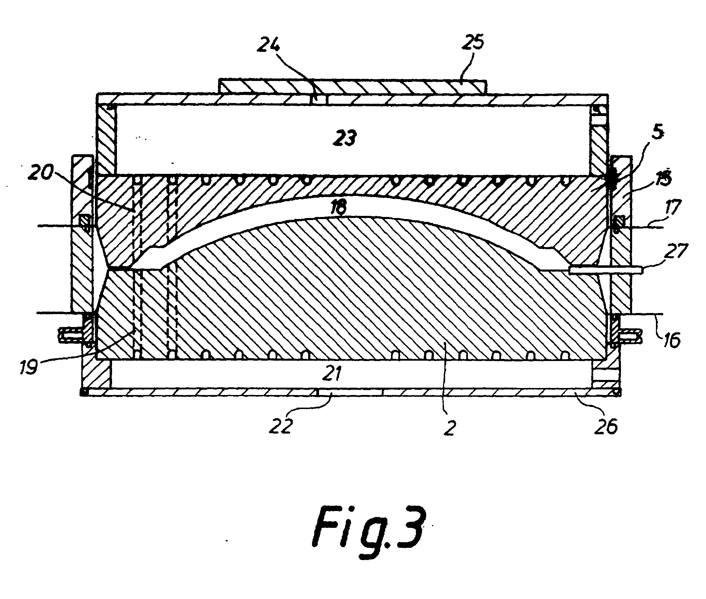

Figur 3 zeigt eine Detailansicht der in Figur 2 dargestellten zusammengefahrenen Formwerkzeuge 2, 5 für ein "Twin-Sheet"-Vakuumformverfahren.

Bei dem "Twin-Sheet"-Vakuumformverfahren werden zwei über einen Spann- bzw. Distanzrahmen 15 voneinander getrennte Kunststoffplatten 16, 17 durch eine nicht dargestellte Heizeinrichtung erwärmt und durch die zwei Formwerkzeuge 2, 5 gleichzeitig verformt. Die beiden Formwerkzeuge 2, 5 bilden nach dem Zusammenfahren und dem Verriegeln der Kernzug-Verriegelungszylinder 6a, 6b mit den Verriegelungseinrichtungen 3a, 3b eine geschlossene Formkammer 18. Die sich in der geschlossenen Formkammer 18 befindlichen Teile der erwärmten Kunststoffplatten 16, 17 werden an die Formwerkzeuge 2, 5 angesaugt. Sowohl das untere Formwerkzeug 2 als auch das obere Formwerkzeug 5 weisen eine Vielzahl von Ansaug-Durchgangsbohrungen 19, 20 auf. Die Ansaugdurchgangsbohrungen 19 des unteren Formwerkzeugs 2 verbinden die Formkammer 18 mit einer unteren Unterdruckkammer 21, die einen unteren Vakuumanschluß bzw. Unterdruckanschluß 22 aufweist. Die oberen Ansaugdurchgangsbohrungen 20 des oberen Formwerkzeugs 5 verbinden die Formkammer 18 mit einer oberen Unterdruckkammer 23, welche einen oberen Vakuumanschluß bzw. Unterdruckanschluß 24 aufweist. Eine Oberstempelplatte 25 dient zur Befestigung der oberen Unterdruckkammer 23 an den oberen Maschinenaufbau 4. Eine Tischplatte 26 dient zur Befestigung der unteren Unterdruckkammer 21 und des unteren Formwerkzeugs 2 an den unteren Maschinenaufbau 1.

Durch Anlegen eines Unterdrucks an den unteren Vakuumanschluß 22 und den oberen Vakuumanschluß 24 wird in den beiden Unterdruckkammern 21, 23 ein Unterdruck bzw. ein Vakuum erzeugt, welches über die Ansaug-Durchgangsbohrungen 19, 20 die durch Kunststoffplatten gebildeten Formteile an die Formwerkzeuge 2, 5 ansaugt. Zusätzlich kann über eine Überdruckblasdüse 27 ein Überdruck zwischen den beiden Formteilen 16, 17 innerhalb der Formkammer 18 aufgebaut werden, welcher die Formteile 16, 17 gegen die Formwerkzeuge 2, 5 preßt und so das Ansaugen unterstützt.

Das in Figur 3 dargestellte "Twin-Sheet"-Formwerkzeug dient zur Durchführung des "Twin-Sheet"-Vakuumformverfahrens. Zunächst werden die Formteile 16, 17 erwärmt und dann durch das Ansaugen mittels Unterdruck sowie durch den in der Formkammer 18 aufgebauten Überdruck verformt. Anschließend werden die beiden Formteile 16, 17 durch Zusammenpressen der beiden Formwerkzeuge 2, 5 miteinander verschweißt. Die Formteile 16, 17 werden durch Thermoplast-Kunststoffplatten gebildet. Die Eigenwärme der durch die nichtdargestellte Heizeinrichtung erwärmten Thermoplast-Kunststoffplatten erlaubt ein Verschweißen der Formteile 16, 17 im gleichen Arbeitsgang, ohne daß irgendwelche Zusatzstoffe eingesetzt werden. Dazu muß das Zusammenpressen der beiden Formwerkzeuge 2, 5 jedoch mit einer sehr hohen Schließkraft erfolgen. Dabei muß die Schließkraft gegen den in der Formkammer 18 aufgebauten Überdruck, sowie gegen den durch die Unterdruckkammern 21, 23 aufgebauten Unterdruck aufgebracht werden.

Diese erforderliche sehr hohe Schließkraft wird bei der erfindungsgemäßen Vakuumformmaschine durch die mit den Verriegelungseinrichtungen 3a, 3b verriegelten Kernzug-Verriegelungszylinder 6a, 6b aufgebracht. Dabei kann die Schließkraft wahlweise mit oder ohne eine elastische Vorspannkraft aufgebracht werden.

Werden die Kernzug-Verriegelungszylinder 6a, 6b mit einer elastischen Vorspannkraft betrieben, werden die beiden Formwerkzeuge 2, 5 mit einer vorbestimmten elastischen Schließkraft zusammengepreßt und so die Schweißfuge der beiden Formteile 16, 17 mit einer vorbestimmten Flächenvorspannkraft beaufschlagt, wodurch eine optimale Reproduzierbarkeit der Verschweißung gewährleistet wird.

Werden die Kernzug-Verriegelungszylinder 6a, 6b ohne Vorspannkraft betrieben und wird der Abstand zwischen den beiden Formwerkzeugen 2, 5 durch eine in den Kernzug-Verriegelungszylindern 6a, 6b integierte Meßeinrichtung maßgenau angefahren, wird eine Schweißfuge erzeugt, welche eine maßgenaue, vorbestimmte Schweißfugendicke aufweist.

Da die Kernzug-Verriegelungszylinder 6a, 6b sowohl mit elastischer Vorspannkraft als auch ohne elastische Vorspannkraft betrieben werden können, ist es möglich, beim "Twin-Sheet"-Vakuumformverfahren die Schweißfuge zwischen den Formteilen 16, 17 entsprechend den verschiedenen Anforderungen zu bilden.

Beim "Überdruck"-Vakuumformverfahren sind ebenfalls erhebliche Schließkräfte erforderlich. Beim "Überdruck"-Vakuumformverfahren werden die Kernzug-Verriegelungszylinder 6a, 6b ebenfalls mit einer elastischen Vorspannungskraft betrieben. Die erfindungsgemäße Vakuumformmaschine kann auch für ein kombiniertes Vakuumformverfahren eingesetzt werden, bei dem das "Twin-Sheet"-Vakuumformverfahren in Verbindung mit dem "Überdruck"-Vakuumformverfahren eingesetzt wird. Hierbei werden die Formteile 16, 17 zunächst erwärmt und durch den angelegten Unterdruck an die Formwerkzeuge 2, 5 angesaugt und dadurch verformt. Anschließend wird ein Überdruck in der Formkammer 18 zwischen den beiden Formwerkzeugen 2, 5 aufgebaut und durch Aufbringen einer elastischen Vorspannungskraft durch die Kernzug-Verriegelungszylinder 6a, 6b eine elastische Schließkraft aufgebracht, wodurch die Schweißfuge zwischen den beiden Formteilen 16, 17 mit einer definierten Flächenvorspannkraft gebildet wird. Nach dem Verschweißen der beiden Formteile 16, 17 werden daran anschließend die Kernzug-Verriegelungszylinder 6a, 6b starr verriegelt, um ein elastisches Öffnen der Formwerkzeuge 2, 5 unter dem Luftdruck zu vermeiden.

Zur Durchführung der verschiedenen Vakuumformverfahren sind die Kernzug-Verriegelungszylinder 6a, 6b der erfindungsgemäßen Vakuumformmaschine sowohl mit als auch ohne Vorspannkraft betreibbar und sind ferner starr verriegelbar.

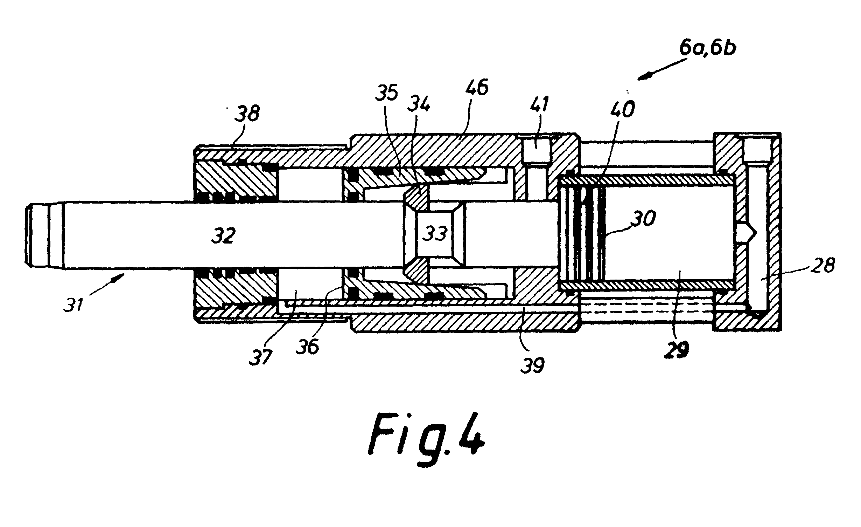

Figur 4 zeigt eine Querschnittsansicht des in der erfindungsgemäßen Vakuumformmaschine verwendeten Kernzug-Verriegelungszylinders 6a, 6b. Durch hydraulische Leitungen 28 wird ein Fluid in eine erste Fluidkammer 29 gedrückt, wodurch ein mechanischer Druck auf die Kolbenfläche 30 eines Kolbens 31 ausgeübt wird. An dem Kolben 31 ist eine Kolbenstange 32 befestigt, die eine Ringnut 33 aufweist. Verriegelungssegmente 34 sind durch ein Verriegelungsschieber 35 in die Ringnut 33 der Kolbenstange 32 ein- und ausrückbar. Der Verriegelungsschieber 35 gleitet über die Verriegelungssegmente 34 und sichert diese in radialer Richtung. Der Verriegelungsschieber 35 weist eine ringförmige Beaufschlagungsfläche 36 auf, durch welche die durch eine zweite Fluidkammer 37 gebildeten Druckkräfte auf den Verriegelungsschieber 35 wirken. Der Verriegelungsschieber 35 befindet sich in einem Gehäuse 37 des Kernzug-Verriegelungzylinders 6a, 6b welches ein Gewinde 38 aufweist. Die erste Fluidkammer 29 und die zweite Fluidkammer 37 sind über eine hydraulische Bypass-Leitung 39 miteinander verbunden.

Wenn der Kolben 31 durch Druckbeaufschlagung auf die Kolbenfläche 30 seine Endlage erreicht, werden die Verriegelungssegmente 34 in die Ringnut 33 der Kolbenstange 32 eingerückt, wie in Figur 4 zu sehen ist. In dieser Stellung ist der Kernzug-Verriegelungszylinder 6a, 6b formschlüssig verriegelt und die Druckzufuhr zu dem Kernzug-Verriegelungszylinder 6a, 6b kann unterbrochen werden. Die Haltekraft des Kernzug-Verriegelungszylinders beträgt in der in Figur 4 dargestellten Verriegelungsstellung ein Vielfaches der hydraulischen Hubkraft. Das Zurückfahren des Kolbens 31 aus seiner Endlage erfolgt durch Druckbeaufschlagung auf die stangenseitige ringförmige Kolbenfläche 40 über eine hydraulische Leitung 41. Dieser Rückfahrdruck hebt gleichzeitig den Verriegelungsschieber 35 aus der Sperrstellung, wobei die Verriegelungssegmente 34 durch die zurückfahrende Kolbenstange 32 aus der Ringnut 33 ausgerückt werden. Durch die konische Kontur des Verriegelungsschiebers 35 und der Verriegelungssegmente 34 kann kurz vor Erreichen der Endlage des Kolbens 31 eine mechanische Vorspannkraft erzeugt werden. Diese mechanische Vorspannkraft ist abhängig von einem einstellbaren Vorspannweg. Die Verriegelung geschieht ausschließlich durch die Verriegelungssegmente 34, so daß keine zusätzliche mechanische Verriegelung notwendig ist.

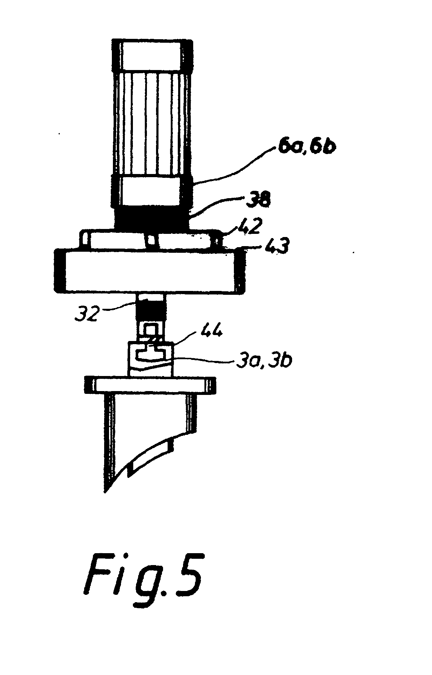

Figur 5 zeigt einen Kernzug-Verriegelungszylinder 6a, 6b und eine Verriegelungseinrichtung 3a, 3b in verriegelter Stellung. Der Kernzugverriegelungszylinder 6a, 6b ist über sein Gewinde 38, auf das eine Nutmutter 42 aufgeschraubt ist, an einen Befestigungsflansch 43 montiert. Der Befestigungsflansch 43 ist an dem oberen Maschinenaufbau 4 befestigt. An dem äußeren Ende der Kolbenstange 32 des Kernzug-Verriegelungszylinders 6a, 6b ist ein Bolzen 44 angebracht, der mit der Verriegelungseinrichtung 3a, 3b verriegelt ist.

Der Bolzen 44 kann beispielsweise durch eine Druckschraube gebildet werden, die in die Verriegelungseinrichtung 3a, 3b eingehängt wird. Der Befestigungsflansch 43 ist beispielsweise über Innensechskantschrauben am oberen Maschinenaufbau 4 befestigt.

Der Verriegelungspunkt wird eingestellt, indem man den Kernzug-Verriegelungszylinder 6a, 6b in den Befestigungsflansch 43 eindreht und den Zylinder in die gewünschte Endstellung bringt.

Durch das Anziehen der Nutmutter 42 wird der Kernzug-Verriegelungszylinder 6a, 6b drehgesichert.

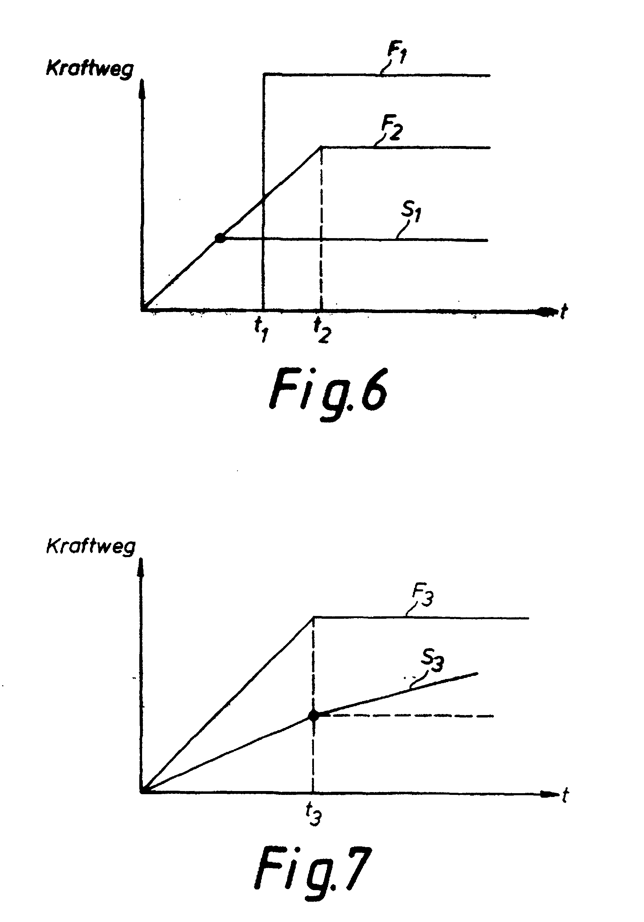

Figur 6 zeigt ein Kraft/Zeit-Diagramm sowie ein Weg/Zeit-Diagramm für die Formwerkzeuge 2, 5 der erfindungsgemäßen Vakuumformmaschine. Die Kurve F1 zeigt das Aufbringen einer hohen Schließkraft auf die Formwerkzeuge bei starrer Verriegelung zum Zeitpunkt t₁. Die Schließkraft steigt dabei sprungartig auf eine vorbestimmte hohe Schließkraft.

Die Kurve F2 zeigt den linearen Anstieg der durch das Einblasen von Druckluft über die Überdruckblasdüse 27 in die Formkammer 18 auf die Formteile 2, 5 wirkenden Druckkräfte. Die bis zum Zeitpunkt t₂ ansteigende Druckkraft wirkt der in Kurve F1 dargestellten Schließkraft entgegen. Die Steigung der Druckkraft hängt beispielsweise von der Öffnungsbreite der Einlaßventile ab und kann durch Druckminderer begrenzt werden. Zum Zeitpunkt t₂ erreicht die aufgebaute Druckkraft, die durch Überdruck in der Formkammer 18 hervorgerufen wird, ihren vorbestimmten Maximalwert.

Die Kurve S1 zeigt ein Weg/Zeit-Diagramm für den vertikalen Abstand der beiden Formwerkzeuge 2, 5. Der Abstand steigt zunächst linear an, bis die Verriegelungsposition erreicht ist und bleibt dann konstant.

Figur 7 zeigt ein Kraft/Zeit-Diagramm und ein Weg/Zeit-Diagramm für die Formwerkzeuge 2, 5 bei Aufbringen einer elastischen Vorspannkraft. Die Kurve F3 zeigt den linearen Anstieg der Schließkraft für die beiden Formwerkzeuge 2, 5 bis zu einem Zeitpunkt t₃. Zum Zeitpunkt t₃ erreicht die Schließkraft einen vorbestimmten und einstellbaren konstanten Wert. Die Kurve S3 zeigt ein Weg/Zeit-Diagramm des vertikalen Abstandes der beiden Formwerkzeuge 2, 5. Bis zum Zeitpunkt t₃, bei dem die Schließkraft ihren Maximalwert erreicht, erhöht sich der Abstand linear.

Nach dem Zeitpunkt t₃ erhöht sich der Abstand zwischen den beiden Formwerkzeugen 2, 5 weiterhin, jedoch mit geringerer Steigung. Nach dem Zeitpunkt t₃ tritt zwischen den beiden Formwerkzeugen 2, 5 und der Krafteinwirkung eine Relativbewegung auf, d.h. es liegt eine elastische Vorspannkraft vor.

## Patentansprüche

1. Vakuumformmaschine zum Umformen von mindestens einem Formteil (16, 17) mit:
einem unteren Formwerkzeug (2), das an einem unteren gestellförmigen Maschinenaufbau (1) angebracht ist, und
einem oberen Formwerkzeug (5), das an einem oberen gestellförmigen Maschinenaufbau (4) angebracht ist,
**gekennzeichnet durch** mindestens einem Kernzug-Verriegelungszylinder (6a, 6b), welcher an dem oberen gestellförmigen Maschinenaufbau (4) befestigt und mit einer zugehörigen Verriegelungseinrichtung (3a, 3b) starr verriegelbar ist, die an dem unteren gestellförmigen Maschinenaufbau (1) angebracht ist.

2. Vakuumformmaschine nach Anspruch 1,
**dadurch gekennzeichnet,**
**daß** der Kernzug-Verriegelungszylinder (6a, 6b) einen verschiebbaren Kolben (40) aufweist, dessen Kolbenstange (32) an ihrem äußeren Ende über einen Bolzen (44) mit der Verriegelungseinrichtung (3a, 3b) verriegelbar ist.

3. Vakuumformmaschine nach Anspruch 1 oder 2,
**dadurch gekennzeichnet,**
**daß** durch den Kernzug-Verriegelungszylinder (6a, 6b) eine elastische Vorspannkraft zwischen den Formwerkzeugen (2, 5) erzeugbar ist.

4. Vakuumformmaschine nach einem der vorhergehenden Ansprüche,
**dadurch gekennzeichnet,**
**daß** die Kolbenstange (32) an ihrem innerhalb des Kernzug-Verriegelungszylinders gelegenen inneren Ende eine Ringnut (33) aufweist, in welche Verriegelungssegmente (34) durch einen Verriegelungsschieber (35) einrückbar sind.

5. Vakuumformmaschine nach Anspruch 4,
**dadurch gekennzeichnet,**
**daß** die Verriegelungssegmente (34) druckgesteuert aus der Ringnut (33) ausrückbar sind.

6. Vakuumformmaschine nach Anspruch 4 oder 5,
**dadurch gekennzeichnet,**
**daß** der Verriegelungsschieber (35) und die Verriegelungssegmente (34) eine konische Form zur Erzeugung der elastischen Vorspannkraft aufweisen.

7. Vakuumformmaschine nach einem der vorhergehenden Ansprüche,
**dadurch gekennzeichnet,**
**daß** die Vorspannkraft in Abhängigkeit von einem Vorspannweg einstellbar ist.

8. Vakuumformmaschine nach einem der vorhergehenden Ansprüche,
**dadurch gekennzeichnet,**
**daß** der Kernzug-Verriegelungszylinder (6a, 6b) durch die einstellbare Vorspannkraft die Formwerkzeuge (2, 5) mit einer vorbestimmten Schließkraft schließt.

9. Vakuumformmaschine nach einem der vorhergehenden Ansprüche,
**dadurch gekennzeichnet,**
**daß** bei starr verriegelten Kernzug-Verriegelungszylinder (6a, 6b) die beiden Formwerkzeuge (2, 5) nicht-elastisch auseinanderfahrbar sind.

10. Vakuumformmaschine nach einem der vorhergehenden Ansprüche,
**dadurch gekennzeichnet,**
**daß** die beiden Formwerkzeuge (2, 5) Ansaugdurchgangsbohrungen (19, 20) aufweisen, durch die eingelegte Formteile (16, 17) mittels Unterdruck an die Formwerkzeuge (2, 5) ansaugbar sind.

11. Vakuumformmaschine nach einem der vorhergehenden Ansprüche,
**dadurch gekennzeichnet,**
**daß** zwischen den Formwerkzeugen (2, 5) durch eine Überdruckeinrichtung (27) ein Überdruck erzeugbar ist.

12. Vakuumformmaschine nach einem der vorhergehenden Ansprüche,
**dadurch gekennzeichnet,**
**daß** der Kernzug-Verriegelungszylinder (6a, 6b) eine integrierte Meßeinrichtung ausweist, durch welche der Abstand zwischen den beiden Formwerkzeugen (2, 5) meßbar ist.

13. Vakuumformmaschine nach einem der vorhergehenden Ansprüche,
**dadurch gekennzeichnet,**
**daß** die Formteile (16, 17) Kunststoffplatten sind.

14. Vakuumformmaschine nach einem der vorhergehenden Ansprüche,
**dadurch gekennzeichnet,**
**daß** die Formteile (16, 17) Thermoplast-Kunststoffplatten sind.

15. Vakuumformmaschine nach einem der vorhergehenden Ansprüche,
**dadurch gekennzeichnet,**
**daß** eines der beiden Formwerkzeuge (2, 5) eine Druckglocke ist.

## Claims

1. Vacuum forming machine for re-shaping at least one molded part (16, 17), comprising:
a lower form tool (2) that is attached at a lower rack-type machine body (1), and
an upper form tool (5) that is attached at an upper rack-type machine body (4),
**characterized by** at least one core puller locking cylinder (6a, 6b) that is fastened on said upper rack-type machine body (4) and adapted to be rigidly locked by means of an associated locking means (3a, 3b) mounted on said lower rack-type machine body (1).

2. Vacuum forming machine according to Claim 1,
**characterised in**
**that** said core puller locking cylinder (6a, 6b) comprises a displaceable piston (40) whose piston rod (32) is adapted to be locked at its outer end via a bolt (44) by means of said locking means (3a, 3b).

3. Vacuum forming machine according to Claim 1 or 2,
**characterised in**
**that** said core puller locking cylinder (6a, 6b) is adapted to generate a resilient biasing force between said form tools (2, 5).

4. Vacuum forming machine according to any of the preceding Claims,
**characterised in**
**that** said piston rod (32) presents an annular groove (33) on its inner end positioned inside said core puller locking cylinder, into which annular groove locking segments (34) can be engaged by means of a locking slide (35).

5. Vacuum forming machine according to Claim 4,
**characterised in**
**that** said locking segments (34) are adapted to be disengaged from said annular groove (33) under pressure control.

6. Vacuum forming machine according to Claim 4 or 5,
**characterised in**
**that** said locking slide (35) and said locking segments (34) have a conical shape for generating said resilient biasing force.

7. Vacuum forming machine according to any of the preceding Claims,
**characterised in**
**that** said biasing force is adjustable as a function of a biasing travel.

8. Vacuum forming machine according to any of the preceding Claims,
**characterised in**
**that** due to said adjustable biasing force, said core puller locking cylinder (6a, 6b) closes said form tools (2, 5) with a predetermined closing force.

9. Vacuum forming machine according to any of the preceding Claims,
**characterised in**
**that** when said core puller locking cylinder (6a, 6b) is rigidly locked said two form tools (2, 5) can be moved apart in a non-resilient manner.

10. Vacuum forming machine according to any of the preceding Claims,
**characterised in**
**that** said two form tools (2, 5) comprise suction through-bores (19, 20) through which the inserted moulded parts (16, 17) can be aspirated to said form tools (2, 5) by means of negative pressure.

11. Vacuum forming machine according to any of the preceding Claims,
**characterised in**
**that** a pressure above atmospheric pressure can be generated between said form tools (2, 5) by means of an excess pressure means (27).

12. Vacuum forming machine according to any of the preceding Claims,
**characterised in**
**that** said core puller locking cylinder (6a, 6b) comprises an integrated measuring means serving to measure the spacing between said two form tools (2, 5).

13. Vacuum forming machine according to any of the preceding Claims,
**characterised in**
**that** said moulded parts (16, 17) are plastic plates.

14. Vacuum forming machine according to any of the preceding Claims,
**characterised in**
**that** said moulded parts (16, 17) are plastic plates consisting of a thermoplastic material.

15. Vacuum forming machine according to any of the preceding Claims,
**characterised in**
**that** one of said two form tools (2, 5) is a pressure dome.

## Revendications

1. Machine de formage sous vide pour former au moins une pièce de forme (16, 17), comprenant:
un outil de formage inférieur (2), qui est disposé sur la structure inférieure de machine (1) en forme de châssis, et
un outil de formage supérieur (5), qui est disposé sur une structure supérieure (4) de la machine, en forme de châssis,
**caractérisée par** un vérin (6a, 6b) de verrouillage de tire-noyau, qui est fixé à la structure supérieure en forme de châssis (4) de la machine et peut être verrouillé rigidement avec un dispositif de verrouillage associé (3a, 3b), qui est disposé sur la structure inférieure en forme de châssis (1) de la machine.

2. Machine de formage sous vide selon la revendication 1, **caractérisée en ce que** le vérin (6a, 6b) de verrouillage de tire-noyau possède un piston déplaçable (40), dont la tige de piston (32) peut être verrouillée, au niveau de son extrémité extérieure, par l'intermédiaire d'un boulon (44), au dispositif de verrouillage (3a, 3b).

3. Machine de formage sous vide selon la revendication 1 ou 2, **caractérisée en ce qu'**une force de précontrainte élastique peut être produite entre les outils de formage (2, 5) par le vérin (6a, 6b) de verrouillage de tire-noyau.

4. Machine de formage sous vide selon l'une des revendications précédentes, **caractérisée en ce que** la tige de piston (32) comporte, sur son extrémité intérieure située à l'intérieur du vérin de verrouillage de tire-noyau, une gorge annulaire (33), dans laquelle des segments de verrouillage (34) peuvent être insérés par un poussoir de verrouillage (35).

5. Machine de formage sous vide selon la revendication 4, **caractérisée en ce que** les segments de verrouillage (34) peuvent être dégagés de la gorge annulaire (33), d'une manière commandée par une pression.

6. Machine de formage sous vide selon la revendication 4 ou 5, **caractérisée en ce que** le poussoir de verrouillage (35) et les segments de verrouillage (32) possèdent une forme conique servant à produire la force de précontrainte élastique.

7. Machine de formage sous vide selon l'une des revendications précédentes, **caractérisée en ce que** la force de précontrainte est réglable en fonction d'une course de précontrainte.

8. Machine de formage sous vide selon l'une des revendications précédentes, **caractérisée en ce que** le vérin (6a, 6b) de verrouillage de tire-noyau ferme, au moyen de la force de précontrainte réglable, des outils de formage (2, 5) avec une force prédéterminée de fermeture.

9. Machine de formage sous vide selon l'une des revendications précédentes, **caractérisée en ce que** dans le cas où le vérin (6a, 6b) de verrouillage de tire-noyau est verrouillé rigidement, les deux outils de formage (2, 5) peuvent être écartés l'un de l'autre d'une manière non élastique.

10. Machine de formage sous vide selon l'une des revendications précédentes, **caractérisée en ce que** les deux outils de formage (2, 5) comportent des perçages traversants d'aspiration (19, 20), au moyen desquels les pièces de forme insérées (16, 17) peuvent être aspirées au moyen d'une dépression contre les outils de formage (2, 5).

11. Machine de formage sous vide selon l'une des revendications précédentes, **caractérisée en ce qu'**une surpression peut être produite entre les outils de formage (2, 5), par un dispositif de surpression (27).

12. Machine de formage sous vide selon l'une des revendications précédentes, **caractérisée en ce que** le vérin (6a, 6b) de verrouillage de tire-noyau possède un dispositif de mesure intégré, grâce auquel la distance entre les deux outils de formage (2, 5) peut être mesurée.

13. Machine de formage sous vide selon l'une des revendications précédentes, **caractérisée en ce que** les outils de formage (16, 17) sont des plaques en matière plastique.

14. Machine de formage sous vide selon l'une des revendications précédentes, **caractérisée en ce que** les pièces de forme (16, 17) sont des plaques de matière thermo-plastique.

15. Machine de formage sous vide selon l'une des revendications précédentes, **caractérisée en ce que** l'un des deux outils de formage (2, 5) est une cloche de pression.
